# EUROPEAN PATENT APPLICATION

(11) **EP 2 246 237 A1**
(43) Date of publication of application: **03.11.2010**
(21) Application number: 09382057.9
(22) Date of filing: 29.04.2009
(51) Int. Cl.: B62D 5/22

(54) **Power steering for vehicles**

(71) Applicant: Cie Automotive, S.A., 48011 Bilbao (Vizcaya) (ES)
(72) Inventor: Elorza Bräuer, Isaac, 48011 Bilbao (Vizcaya) (ES)
(74) Representative: Carpintero Lopez, Francisco

(57) **Abstract**

The present invention relates to a power steering for vehicles comprising a steering tube (1) joined to a steering box (2) and a tie-rod (3) immersed in pressurized oil which moves in a hydraulic chamber formed inside the tube (1) and is connected to a piston (4) dividing the hydraulic chamber into two parts, such that the oil enters or exits through couplers (5) in each of these parts depending on the movement of the piston (4) away from or towards the steering box (2), in which the end of the tube opposite to the steering box (2) is smaller and a retaining bush (6) is housed therein for the sealed closure of the hydraulic chamber.

## Description

### Technical Field of the Invention

The present invention is comprised within the field of power steering for automotive vehicles and it particularly relates to the steering tube and to the retaining and guide means of the rack tie-rod.

### Background of the Invention

The purpose of a power steering is to reduce the force that the driver exerts to turn the steering wheel, for which purpose it has a hydraulic circuit which performs most of the work necessary for turning the steering.

Power steering is formed by a hydraulic pump using the force of the engine to drive the oil of the hydraulic circuit. The pump collects the oil from a deposit and sends it to the steering box in which the rotary control valve is located.

Power steering is configured by an aluminum steering box and a steering tube joined to one another. The steering column and a rack tie-rod related to one another by means of a rack and pinion system access the steering box. The rack tie-rod can move longitudinally throughout the steering tube and said rack tie-rod bears a piston dividing the steering tube into two chambers with pressurized oil coming from the aforementioned hydraulic system.

One of the points in which the safety and assurance of the leak-tightness must be maximum is the point corresponding to the closure of the end of the steering tube by means of a guide bush, also called half shaft, which, in addition to tightly closing the steering tube, acts as a guide for the rack tie-rod in its movement along the tube.

Different solutions are known for closing the steering tube, such as those observed in patents EP 1777142, KR1020040104140, DE 19926342, ES 2028587 and DE 10356594.

The most common solution today is to produce a flaring or widening of the free end of the steering tube, creating an expanded area in which the retaining bush with a leak-tight O-ring between the bush and the expanded inside of the tube, the bush being fixed to the tube by means of a circlip element.

This system has the drawback that if the circlip fails, the retaining bush may come out due to the effect of the pressure of the oil in the chamber.

Other systems, such as that described in patent DE 19926342, are more expensive as they require a greater number of parts and more assembly operations.

The solution object of the invention is based on an innovative change in the configuration of the steering tube and of the guide bush which provides a solution that is not only competitive in terms of production and assembly costs, but which in turn assures the leak-tightness required between the guide bush and the steering tube, in addition to being absolutely impossible for the guide bush from coming out of the steering tube, no matter what the pressure of the oil inside it is.

### Description of the Invention

The present invention relates to a power steering for vehicles comprising:
- a steering box configured to allow access to a steering column,
- a steering tube joined by a first coupling end for coupling to the steering box and configured to house therein a rack tie-rod, the mentioned tie-rod being related at one coupling end for coupling to the steering column through a rack and pinion transmission, whereas the other end of the rack tie-rod traverses a guide bush closing the end of the steering tube opposite to the coupling end for coupling to the steering box,
- a piston assembled in the rack tie-rod dividing the steering tube into two chambers full of oil and connected with a closed hydraulic circuit,
- a rotary distributing valve in solidarity with the steering column, controlling the oil circuit.

All these elements are in conventional power steering systems; however, in the present invention the end of the steering tube opposite to the coupling end of the steering box has been reduced to form a housing. This housing is configured to house the guide bush and has a first front section with a through hole, a second section having a smaller diameter than the diameter of the steering tube before the reduction, an inclined third section for continuation or passage from the second section to a non-reduced fourth section, such that the guide bush has an outer geometry complementary to the inner geometry of the housing in which it is retained due to the effect of the actual pressure of the oil inside the steering tube.

The guide bush can be made of a plastic or metal material; in any case it must be designed such that it prevents the oil from leaking both outside and inside the pressure chamber.

With this novel design, the assembly of the guide bush in the housing must be prior to the assembly of the steering tube in the steering box. In other words, first the guide bush is introduced in the housing which has been obtained from the reduction of the end of the steering tube, and then the mentioned tube is joined to the steering box.

To prevent the movement during the assembly process, the guide bush can have a grooving in the periphery of its most reduced end which generates certain interference with the tube at the time of assembly.

The leak-tightness of the system is assured by the impossibility of the guide bush being moved due to the retention of the steering tube at one end and the pressure of the oil in the chamber which is in contact with the bush.

The leak-tightness between the guide bush and its housing in the steering tube is obtained by means of a first gasket housed in a perimetric channel of the guide bush.

On the other hand, the leak-tightness between the rack tie-rod and the guide bush is achieved by means of a second threaded type or lip type gasket assembled in the inner through hole of the guide bush.

### Description of the Drawings

To complete the description and for the purpose of aiding to better understand the features of the invention according to a preferred embodiment thereof, a set of drawings is attached as an integral part of said description in which the following is depicted with an illustrative and non-limiting manner:
- Figure 1 shows a cross-sectional view of a steering tube with the reduced end according to a preferred embodiment of the invention.
- Figure 2 shows a detailed view of the guide bush and the gaskets before the assembly in the steering tube according to the embodiment shown in Figure 1.

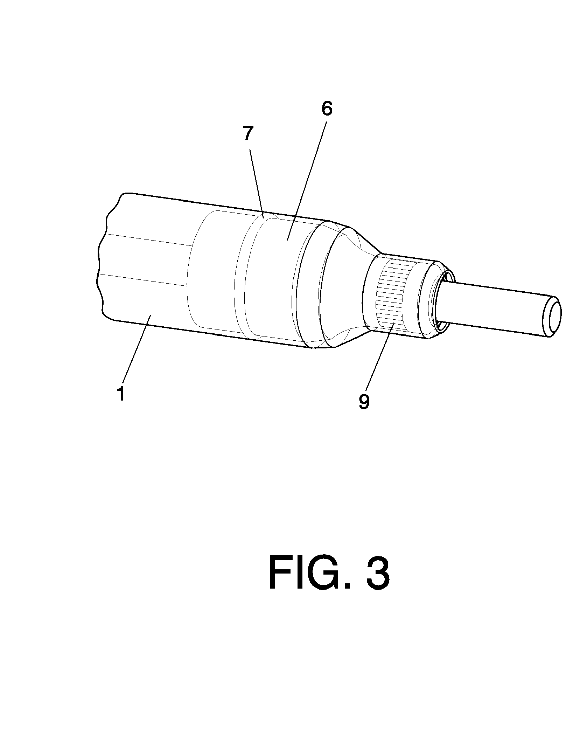

- Figure 3 shows a detailed view of the guide bush and the gaskets after the assembly in the steering tube according to the embodiment of Figure 1.

### Preferred Embodiment of the Invention

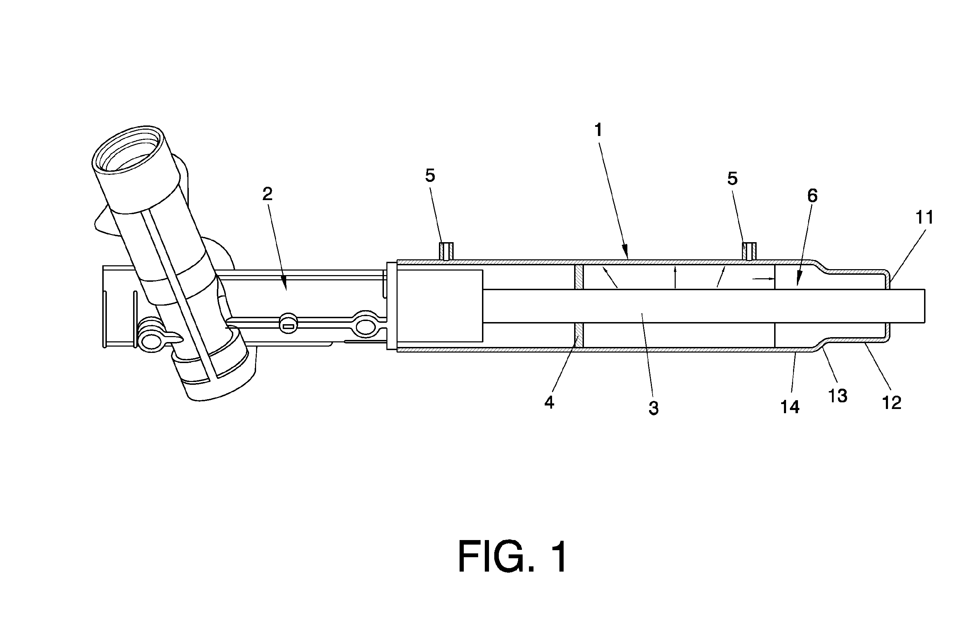

In a preferred embodiment of the present invention, as observed in Figure 1, the power steering comprises a steering box (2) which is accessed by a steering column (not depicted in the figures). There is a steering tube (1) joined to the steering box (2), inside which steering tube there is housed a rack tie-rod (3). The steering tube (1) is joined to the steering box (2) at a first end, whereas the other end, opposite to the first end, has been reduced, forming a housing in which a guide bush (6) is housed.

The housing has a first front section (11) with a through hole, a second section (12) having a smaller diameter than that of the steering tube (1) before the reduction, an inclined third section (13) for continuation or passage from the second section (12) to a non-reduced fourth section (14). On the other hand, the guide bush (6) has an outer geometry complementary to the inner geometry of the housing, such that the bush (6) is retained due to the effect of the actual pressure of the oil inside the steering tube (1).

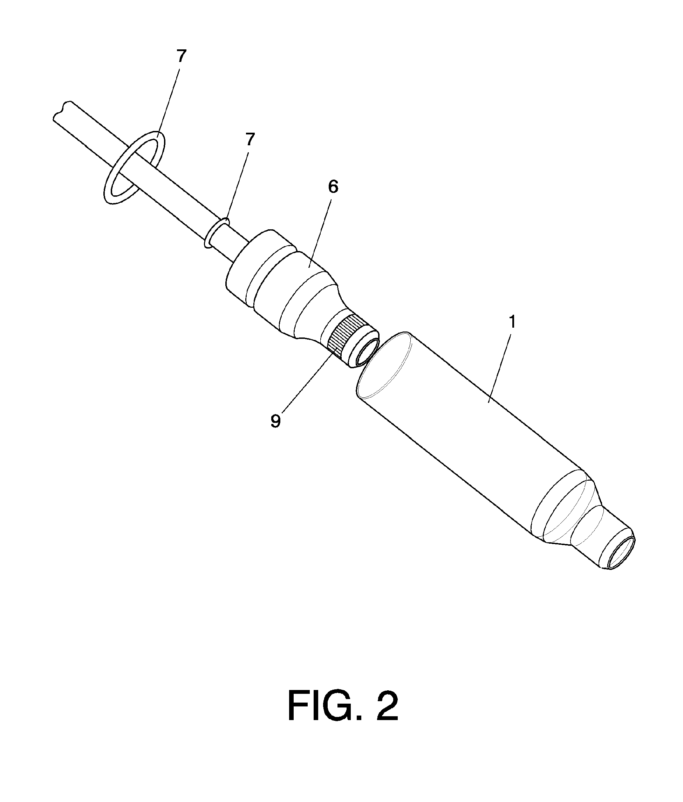

Figure 2 shows the rack tie-rod (3) traversing the guide bush (6) before its assembly in the steering tube (1). This figure also shows a first gasket (7) and second gasket (8). The first gasket (7) is housed in a perimetric channel of the guide bush (6), thus achieving the leak-tightness between the guide bush and the housing in the steering tube. The second gasket (8) which can be a threaded or lip type gasket, is assembled in an inner through hole of the guide bush (6).

To prevent movement during the assembly process, the guide bush (6) can have a grooving (9) in the periphery of its most reduced end which generates certain interference with the tube (1) at the time of assembly.

## Claims

1. Power steering for a vehicle comprising:
- a steering box (2) configured to allow access to a steering column,
- a steering tube (1) joined by a first coupling end for coupling to the steering box (2) and configured to house therein a rack tie-rod (3), the mentioned tie-rod (3) being related at one coupling end for coupling to the steering column through a rack and pinion transmission, whereas the other end of the rack tie-rod (3) traverses a guide bush (6) closing the end of the steering tube opposite to the coupling end for coupling to the steering box,
- a piston (4) assembled in the rack tie-rod (3) dividing the steering tube (1) into two chambers full of oil and connected with a closed hydraulic circuit,
- a rotary distributing valve in solidarity with the steering column, controlling the oil circuit,
**characterized in that** the end of the steering tube (1) opposite to the coupling end of the steering box (2) has been reduced to form a housing for the guide bush (6), which housing has a first front section (11) with a through hole, a second section (12) having a smaller diameter than that of the steering tube (1) before the reduction, an inclined third section (13) for continuation or passage from the second section (12) to a non-reduced fourth section (14), such that the guide bush has an outer geometry complementary to the inner geometry of the housing, where it is retained due to the effect of the actual pressure of the oil inside the steering tube (1).

2. Power steering for vehicles according to claim 1, **characterized in that** the guide bush (6) is introduced in its housing at the opposite end of the steering tube (1) before its coupling to the steering box (2).

3. Power steering for vehicles according to any of the previous claims, **characterized in that** the guide bush (6) has a grooving (9) in the periphery of its most reduced end.

4. Power steering for vehicles according to any of the previous claims, **characterized in that** the leak-tightness between the bush and its housing in the steering tube (1) is obtained by means of a gasket (7) housed in a perimetric channel of the guide bush (6).

5. Power steering for vehicles according to any of the previous claims, **characterized in that** the leak-tightness between the rack tie-rod (3) and the guide bush (6), is achieved by means of a threaded type or lip type gasket (8) assembled in the inner through hole of the guide bush (6).
